# EUROPÄISCHE PATENTSCHRIFT

(11) **EP 3 032 278 B1**
(45) Veröffentlichungstag und Bekanntmachung des Hinweises auf die Patenterteilung: **22.03.2017**
(21) Anmeldenummer: 14197451.9
(22) Anmeldetag: 11.12.2014
(51) Int. Cl.: G01S 17/42, G01S 7/481

(54) **Optoelektronischer Sensor**
Optoelectronic sensor
Capteur optoélectronique

(43) Veröffentlichungstag der Anmeldung: 15.06.2016
(73) Patentinhaber: SICK AG, 79183 Waldkirch (DE)
(72) Erfinder: Nübling, Ralf Ulrich, 79211 Denzlingen (DE); Schmalfuß, Moritz, 79254 Oberried (DE)
(74) Vertreter: Ludewigt, Christoph

(56) Entgegenhaltungen:
- EP-A1- 2 237 063
- DE-A1-102006 024 534
- US-A1- 2009 309 435
- US-A1- 2014 111 812

## Beschreibung

Die Erfindung betrifft einen optoelektronischen Sensor zum Erfassen eines Objektes gemäß dem Oberbegriff des Anspruchs 1.

Für Abstandsmessungen, die einen großen horizontalen Winkelbereich des Messsystems erforderlich machen, eignen sich optoelektronische Sensoren, insbesondere Laserscanner, besonders gut. In einem Laserscanner überstreicht ein von einer Lichtsende-Einheit, in Form eines Lasers, erzeugter Lichtstrahl periodisch einen Überwachungsbereich. Das Licht wird an Objekten in dem Überwachungsbereich remittiert und von einer Lichtempfänger-Einheit empfangen. Das empfangene Licht wird in dem Laserscanner mittels zumindest einer Auswerteeinheit ausgewertet.

Aus der Winkelstellung einer Drehwelle des Sensors, an die vorzugsweise die Lichtsende-Einheit, die Lichtempfänger-Einheit und die Auswerteeinheit angebracht sind, wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist ein Objekt in dem Überwachungsbereich erfasst.

Durch die steigende Leistungsfähigkeit der Auswerteeinheit und kompakte Bauweise des Sensors ist eine hohe Wärmeentwicklung im Sensor gegeben, die durch passive Kühlung, wie z.B. Wärmepads, nicht zufriedenstellend lösbar ist, so dass eine Einhaltung der zulässigen Betriebstemperatur des Sensors schwierig ist. Die Kühlung des Sensors wird erschwert, wenn die Elektronik an sich im Sensor beweglich vorgesehen ist.

US 2014/111812 A1 offenbart ein 3D-Scannersystem mit den Merkmalen des Oberbegriffs des Anspruchs 1.

Es ist daher eine Aufgabe der Erfindung, einen optoelektronischen Sensor zur Verfügung zu stellen, der eine gezielte Kühlung der wärmeproduzierenden Teile des Sensors ermöglicht.

Diese Aufgabe wird erfindungsgemäß gelöst durch einen optoelektronischen Sensor mit den Merkmalen des Anspruchs 1.

Gemäß einem bevorzugten Ausführungsbeispiel ist die Befestigungsplatte senkrecht zu der Welle des Sensors angeordnet und sind an der Befestigungsplatte die zumindest eine Auswerteeinheit und ein erstes Luftleitelement entlang der Welle in Reihe zu der Befestigungsplatte angebracht, so dass Luft mittels des ersten Luftleitelements in Richtung der Befestigungsplatte geleitet wird. Hierdurch können durch die definierte Leitung der Kühlluft auf die besonders wärmeentwickelnden Teile und/oder wärmeempfindlichen Teile des Sensors vorteilhafterweise diese Teile gezielt gekühlt werden.

Gemäß einem weiteren bevorzugten Ausführungsbeispiel ist auf einer Seite der Befestigungsplatte die zumindest eine Auswerteeinheit angebracht und ist auf der anderen Seite der Befestigungsplatte zumindest ein zweites Luftleitelement über zumindest einem materialfreien Bereich der Befestigungsplatte vorgesehen, so dass Luft mittels des zweiten Luftleitelements durch den zumindest einen materialfreien Bereich der Befestigungsplatte entlang der Welle des Sensors auf die zumindest eine Auswerteeinheit umleitbar ist.

Weiterhin besteht gemäß einem bevorzugten Ausführungsbeispiel das erste Luftleitelement aus einem Propeller oder einem Impeller, der eine Mehrzahl von Flügeln aufweist. Vorteilhafterweise sind eine Anzahl von Flügelenden der Flügel um eine Achse, die senkrecht zu der Welle des Sensors ist, gebogen.

Gemäß einem weiteren bevorzugten Ausführungsbeispiel weist das zweite Luftleitelement eine dreidimensionale, auf einer Seite offene Rampenform auf, die in einer Drehrichtung der Welle des Sensors zunimmt.

Gemäß einem weiteren bevorzugten Ausführungsbeispiel ist der zumindest eine materialfreie Bereich der Befestigungsplatte als Durchbohrung in der Befestigungsplatte ausgebildet.

Gemäß einem weiteren bevorzugten Ausführungsbeispiel sind vier Lichtsende-Einheiten, vier Lichtempfänger-Einheiten und vier entsprechend zugeordnete Auswerteeinheiten vorgesehen, und wobei jeweils eine Lichtsende-Einheit, eine Lichtempfänger-Einheit und eine Auswerteeinheit als eine Optikeinheit vorgesehen sind und jede Optikeinheit in jeweils eine Richtung des Sensors ausgerichtet ist.

Gemäß einem weiteren bevorzugten Ausführungsbeispiel weist die Befestigungsplatte vier rampenförmige zweite Luftleitelemente auf, die über vier entsprechende materialfreie Bereiche der Befestigungsplatte angeordnet sind, so dass jeder Auswerteeinheit ein rampenförmiges zweites Luftleitelement zugeordnet ist.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnung im Einzelnen erläutert. In der Zeichnung zeigen:
- Fig. 1: eine schematische 3D-Darstellung eines bevorzugten Ausführungsbeispiels eines erfindungsgemäßen Sensors;
- Fig. 1a: eine schematische 3D-Darstellung eines weiteren bevorzugten Ausführungsbeispiels des erfindungsgemäßen Sensors;
- Fig. 2: eine schematische 3D-Darstellung der erfindungsgemäßen Luftleitelemente;
- Fig. 3: eine schematische 3D-Darstellung eines erfindungsgemäßen ersten Luftleitelements; und
- Fig. 3a: eine schematische Seitenansicht des erfindungsgemäßen ersten Luftleitelements.

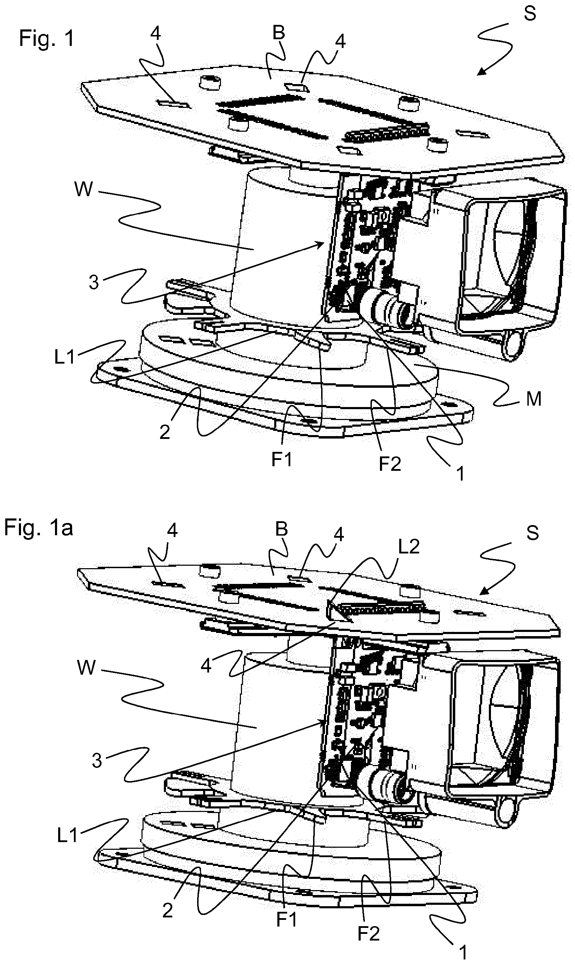

In der Figur 1 ist eine schematische 3D-Darstellung eines bevorzugten Ausführungsbeispiels des erfindungsgemäßen Sensors S gezeigt.

Der erfindungsgemäße Sensor S weist einen Antrieb auf, der aus einem Motor M und eine Welle W besteht. An der Welle W ist eine Befestigungsplatte B vorgesehen, die an einem Ende der Welle W und senkrecht zu der Welle W angeordnet ist, so dass, wenn der Sensor S aktiv ist, der Motor M die Welle W antreibt, die die Befestigungsplatte B um eine Drehachse der Welle W rotiert.

Vorteilhafterweise ist die Befestigungsplatte B als Platine ausgebildet, so dass elektronische Bauteile an die Befestigungsplatte B angebracht werden können.

Zum besseren Verständnis ist in der Figur 1 eine bestückte Platine dargestellt, die an der Befestigungsplatte B angebracht ist, so dass die bestückte Platine mit der Befestigungsplatte B um die Drehachse der Welle W mitrotiert, wobei die Anzahl der bestückten Platinen erfindungsgemäß nicht auf Eins beschränkt ist.

Auf der Platine sind eine Lichtsende-Einheit 1 und eine Lichtempfänger-Einheit 2 vorgesehen, so dass die Lichtsende-Einheit 1 und die Lichtempfänger-Einheit 2 ebenfalls um die Drehachse der Welle W rotieren.

Bei der Rotation der Welle W sendet die Lichtsende-Einheit 1 einen Lichtstrahl in den Überwachungsbereich und die Lichtempfänger-Einheit 2 empfängt einen an einem Objekt remittierten Lichtstrahl.

Eine auf der bestückten Platine vorgesehenen Auswerteeinheit 3 wertet die empfangenen Lichtstrahlen aus und erfasst das Objekt in dem Überwachungsbereich.

Hierbei stellt die Auswerteeinheit 3 mit ihrer Leistung eine signifikante Wärmequelle in dem Sensor S dar, die ohne geeignete Abkühlung die Betriebssicherheit des Sensors S gefährdet.

Erfindungsgemäß ist zumindest ein Luftleitelement L1 vorgesehen.

Bei dem in der Figur 1 dargestellten Ausführungsbeispiel des erfindungsgemäßen Sensors S ist das erste Luftleitelement L1 an dem der Befestigungsplatte B gegenüberliegenden befindlichen Ende der Welle W des Sensors S angeordnet, so dass sich die bestückte Platine mit der Lichtsende-Einheit 1, der Lichtempfänger-Einheit 2 und der Auswerteeinheit 3 zwischen der Befestigungsplatte B und dem ersten Luftleitelement L1 befindet. D.h. die Befestigungsplatte B, insbesondere die Auswerteeinheit 3 und das erste Luftleitelement L1 sind entlang der Welle W des Sensors S in einer Reihe angebracht.

Das erste Luftleitelement L1 ist derart geformt, dass bei einer Rotation der Welle W des Sensors S Luft innerhalb des Sensors (S) durch das erste Luftleitelement L1 entlang der Welle W des Sensors S direkt auf die Auswerteeinheit 3 leitbar ist. Hierbei wird die Luft in Richtung der Befestigungsplatte B geleitet, die durch zumindest einen materialfreien Bereich 4 in der Befestigungsplatte B entweicht.

Der materialfreie Bereich in der Befestigungsplatte B ist vorzugsweise als Durchbohrung in der Befestigungsplatte B ausgebildet.

Vorzugsweise besteht das erste Luftleitelement L1 aus einem Propeller oder Impeller, der eine Mehrzahl von Flügeln F1, F2, vorzugsweise acht, aufweist. Vorteilhafterweise sind eine Anzahl von Flügelenden der Flügel F1 um eine Achse gebogen, die senkrecht zu der Welle W des Sensors S ist. Dadurch wird die Luft gezielt in Richtung der Auswerteeinheit 3 gelenkt.

Gemäß einem weiteren bevorzugten, in der Figur 1a dargestellten, Ausführungsbeispiel des erfindungsgemäßen Sensors S ist auf der der bestückten Platine abgewandten Seite der Befestigungsplatte B zumindest ein zweites Luftleitelement L2 vorgesehen, das über dem materialfreien Bereich 4 der Befestigungsplatte B angeordnet ist. Das zweite Luftleitelement L2 weist eine dreidimensionale, auf einer Seite offene Rampenform auf, die in einer Drehrichtung der Welle W des Sensors S zunimmt. D.h. das zweite Luftleitelement L2 hat eine Ähnlichkeit mit einer Pultdachform.

Durch die offene Seite des rampenförmigen zweiten Luftleitelements L2 ist die Luft innerhalb des Sensors S auf die bestückte Platine, vor allem aber auf die Auswerteeinheit 3, leitbar, so dass eine gezielte Kühlung der Auswerteeinheit 3 durchgeführt werden kann.

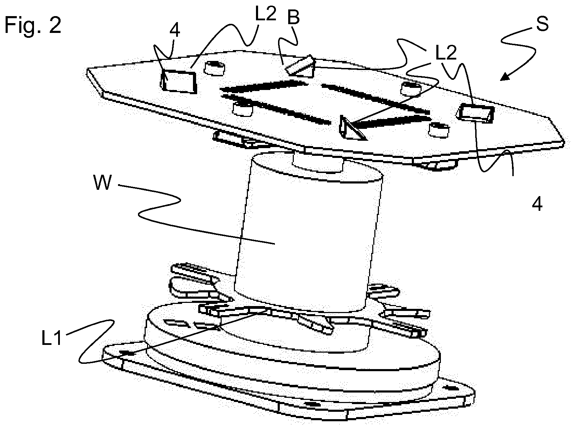

Wie in der Figur 2 schematisch dargestellt, bewirkt die bevorzugte Anordnung der ersten und zweiten Luftleitelemente L1, L2 eine definierte und gerichtete Luftströmung der Luft entlang der Welle W des Sensors S während einer Drehung derselben. Hierbei ist die Auswerteeinheit 3 innerhalb dieser Luftströmung angeordnet.

Gemäß einer nicht dargestellten Anordnung des erfindungsgemäßen Sensors S sind vier Lichtsende-Einheiten 1, vier Lichtempfänger-Einheiten 2 und vier entsprechend zugeordnete Auswerteeinheiten 3 vorgesehen. Jeweils eine Lichtsende-Einheit 1, eine Lichtempfänger-Einheit 2 und eine Auswerteeinheit 3 bilden hierbei eine Optikeinheit OE des Sensors S, wobei jede Optikeinheit OE des Sensors S in jeweils eine Richtung des Sensors S ausgerichtet ist.

Jeweils eine Optikeinheit OE ist zwischen dem ersten und zweiten Luftleitelement L1, L2 an der Befestigungsplatte B angeordnet, so dass jede Optikeinheit OE einer jeweiligen Luftströmung ausgesetzt ist. Insbesondere weist die Befestigungsplatte B vier rampenförmige zweite Luftleitelemente L2 auf, die jeweils über vier entsprechende materialfreie Bereiche 4 der Befestigungsplatte B angeordnet sind, so dass jeder Optikeinheit OE bzw. jeder Auswerteeinheit 3 ein rampenförmiges zweites Luftleitelement L2 zugeordnet ist.

Die rampenförmigen zweiten Luftleitelemente L2 sind 90° Grad versetzt zu den Ausrichtungsrichtungen der Optikeinheiten OE des Sensors S auf der Befestigungsplatte B angeordnet, so dass sich die rampenförmigen zweiten Luftleitelemente L2 jeweils zwischen zwei Ausrichtungsrichtungen der Optikeinheiten OE des Sensors S befinden.

Ferner weist das erste Luftleitelement L1 acht Flügel F1, F2 auf, die derart angeordnet sind, dass vier Flügel F2 parallel zu den jeweiligen Optikeinheiten OE des Sensors S ausgerichtet sind und vier Flügeln F1 jeweilige rampenförmige zweite Luftleitelemente L2 gegenüberliegend angeordnet sind.

Hierbei weisen die parallel zu den Optikeinheiten OE des Sensors S angeordneten Flügel F2 eine stimmgabelähnliche Form auf, so dass die Luftströmung im Wesentlichen nicht beeinflusst wird. Die den rampenförmigen zweiten Luftleitelementen L2 gegenüberliegend angeordneten Flügel F1 weisen um eine Achse, die senkrecht zu der Welle W des Sensors S ist, gebogene Flügelenden auf, so dass die Luft in Richtung der rampenförmigen zweiten Luftleitelemente L2 und entlang der Welle W des Sensors S gelenkt werden kann.

D.h. die stimmgabel-förmigen Flügel F2 des ersten Luftleitelements L1 beeinflussen die Luftströmung unwesentlich, so dass die Lichtsende-Einheiten 1 und Lichtempfänger-Einheiten 2 nicht negativ beeinflusst werden. Die mit gebogenen Flügelenden versehenen Flügel F1 des ersten Luftleitelements L1 bewirken eine gerichtete Ablenkung der Luft in Richtung der Wärmequellen, d.h. die Auswerteeinheiten 3, des Sensors S, so dass eine gezielte Abkühlung der Wärmequelle des Sensors S ermöglicht ist.

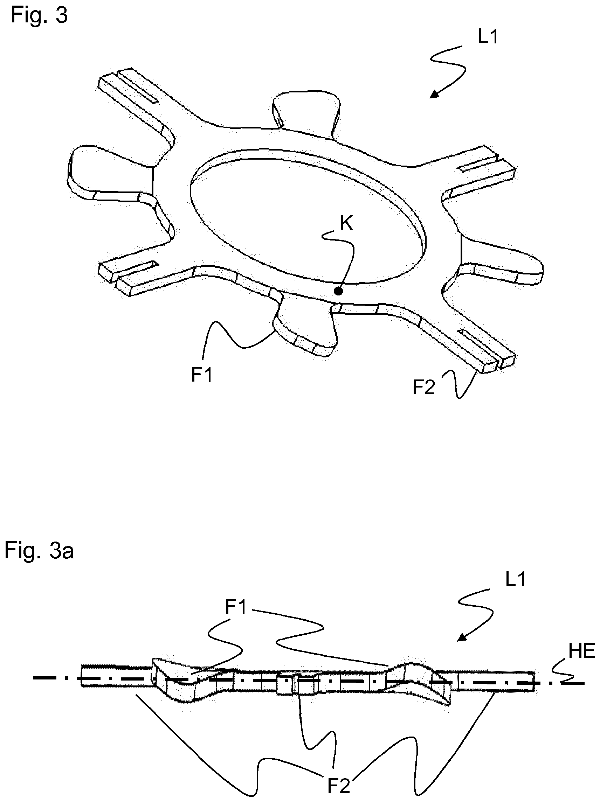

Die Figuren 3 und 3a zeigen ein bevorzugtes Ausführungsbeispiel des erfindungsgemäßen ersten Luftleitelements L1 in Form eines Propellers.

Das propellerartige erste Luftleitelement L1 weist acht Flügel F1, F2 auf, wobei vier Flügel F1 gegenüber einer Hauptebene HE des ersten Luftleitelements L1 schräg gebogene Flügelenden aufweisen und vier Flügel F2 eine in der Hauptebene liegende stimmgabelähnliche Form aufweisen.

Die Flügel F1 mit gebogenen Flügelenden und die stimmgabelförmigen Flügel F2 sind abwechselnd an einem Kreiskörper K des ersten Luftleitelements L1 angeordnet, so dass bei einer Montage des ersten Luftleitelements L1 an die Welle W des Sensors S die stimmgabelförmigen Flügel F2 parallel zu den und unterhalb der Optikeinheiten OE des Sensors S justiert werden können, wobei die Flügel F1 mit gebogenen Flügelenden automatisch zwischen den Optikeinheiten OE des Sensors S angeordnet wären.

Die gebogenen Flügelenden der Flügel F1 sind breiter ausgebildet als die Schäfte der Flügel F1, über die die gebogenen Flügelenden an dem Kreiskörper K verbunden sind. Hierdurch ist gewährleistet, dass eine ausreichende Luftmenge in Richtung der Auswerteeinheiten 3 geleitet wird.

Durch die erfindungsgemäße Umleitung der Luft im Inneren des Sensors S entlang der Welle W des Sensors S zum Umfang des Sensors S ist neben einer gezielten Abkühlung der Auswerteeinheiten 3 auch eine gezielte Erwärmung des Außenbereichs des Sensors S zum Verhindern von z.B. Beschlag, Kondenswasser, Eisbildung oder dergleichen erzielbar.

### Bezugszeichenliste

- 1: Lichtsende-Einheit
- 2: Lichtempfänger-Einheit
- 3: Auswerteeinheit
- 4: Materialfreier Bereich

- B: Befestigungsplatte
- F1, F2: Flügel
- HE: Hauptebene
- K: Kreiskörper
- L1: Erstes Luftleitelement
- L2: Zweites Luftleitelement
- M: Motor
- OE: Optikeinheit
- S: Optoelektronischer Sensor
- W: Welle

## Patentansprüche

1. Optoelektronischer Sensor (S), insbesondere Laserscanner, zum Erfassen eines Objektes, mit
zumindest einer Lichtsende-Einheit (1) zum Aussenden eines Lichtstrahls, zumindest einer Lichtempfänger-Einheit (2) zum Empfangen eines remittierten Lichtstrahls, und
zumindest einer Auswerteeinheit (3), die den remittierten Lichtstrahl auswertet und mittels einer Befestigungsplatte (B) an einer Welle (W) des Sensors (S) befestigt ist, so dass bei einer Rotation der Welle die Auswerteeinheit (3) mit der Befestigungsplatte (B) um die Drehachse der Welle mitrotiert, **dadurch gekennzeichnet, dass** zumindest ein Luftleitelement (L1, L2) vorgesehen und derart geformt ist, dass bei einer Rotation der Welle (W) des Sensors (S) Luft innerhalb des Sensors (S) durch das zumindest eine Luftleitelement (L1, L2) entlang der Welle (W) des Sensors (S) direkt auf die zumindest eine Auswerteeinheit (3) geleitet wird.

2. Optoelektronischer Sensor (S) nach Anspruch 1, **dadurch gekennzeichnet, dass** die Befestigungsplatte (B) senkrecht zu der Welle (W) des Sensors angeordnet ist und an der Befestigungsplatte (B) die zumindest eine Auswerteeinheit und ein erstes Luftleitelement (L1) entlang der Welle (W) in Reihe zu der Befestigungsplatte (B) angebracht sind, so dass Luft mittels des ersten Luftleitelements (L1) in Richtung der Befestigungsplatte (B) geleitet wird.

3. Optoelektronischer Sensor (S) nach Anspruch 1 oder 2, **dadurch gekennzeichnet, dass** auf einer Seite der Befestigungsplatte (B) die zumindest eine Auswerteeinheit (3) angebracht ist und auf der anderen Seite der Befestigungsplatte (B) zumindest ein zweites Luftleitelement (L2) über zumindest einem materialfreien Bereich (4) der Befestigungsplatte (B) vorgesehen ist, so dass Luft mittels des zweiten Luftleitelements (L2) durch den zumindest einen materialfreien Bereich (4) der Befestigungsplatte (B) entlang der Welle (W) des Sensors (S) auf die zumindest eine Auswerteeinheit (3) umleitbar ist.

4. Optoelektronischer Sensor (S) nach zumindest einem der vorhergehenden Ansprüche 1 bis 4, **dadurch gekennzeichnet, dass** das erste Luftleitelement (L1) aus einem Propeller oder Impeller besteht, der eine Mehrzahl von Flügeln (F1, F2) aufweist.

5. Optoelektronischer Sensor (S) nach Anspruch 4, **dadurch gekennzeichnet, dass** eine Anzahl von Flügelenden der Flügel (F) um eine Achse, die senkrecht zu der Welle (W) des Sensors (S) ist, gebogen sind.

6. Optoelektronischer Sensor (S) nach zumindest einem der vorhergehenden Ansprüche 1 bis 5, **dadurch gekennzeichnet, dass** das zweite Luftleitelement (L2) eine dreidimensionale, auf eine Seite offene Rampenform aufweist, die in einer Drehrichtung der Welle (W) des Sensors (S) zunimmt.

7. Optoelektronischer Sensor (S) nach zumindest einem der vorhergehenden Ansprüche 1 bis 6, **dadurch gekennzeichnet, dass** der zumindest eine materialfreie Bereich (4) der Befestigungsplatte (B) als Durchbohrung in der Befestigungsplatte (B) ausgebildet ist.

8. Optoelektronischer Sensor (S) nach zumindest einem der vorhergehenden Ansprüche 1 bis 7, **dadurch gekennzeichnet, dass** vier Lichtsende-Einheiten (1), vier Lichtempfänger-Einheiten (2) und vier entsprechend zugeordnete Auswerteeinheiten (3) vorgesehen sind, und wobei jeweils eine Lichtsende-Einheit (1), eine Lichtempfänger-Einheit (2) und eine Auswerteeinheit (3) als eine Optikeinheit (OE) vorgesehen sind und jede Optikeinheit (OE) in jeweils eine Richtung des Sensors (S) ausgerichtet ist.

9. Optoelektronischer Sensor (S) nach Anspruch 8, **dadurch gekennzeichnet, dass** die Befestigungsplatte (B) vier rampenförmige zweite Luftleitelemente (L2) aufweist, die über vier entsprechende materialfreie Bereiche (4) der Befestigungsplatte (B) angeordnet sind, so dass jeder Auswerteeinheit (3) ein rampenförmiges zweites Luftleitelement (L2) zugeordnet ist.

## Claims

1. An optoelectronic sensor (S), in particular a laser scanner, for detecting an object, comprising
at least one light transmission unit (1) for transmitting a light beam;
at least one light receiver unit (2) for receiving a remitted light beam; and at least one evaluation unit (3) that evaluates the remitted light beam and is fastened to a shaft (W) of the sensor (S) by means of a fastening plate (B) such that the evaluation unit (3) co-rotates with the fastening plate (B) about the axis of rotation of the shaft on a rotation of the shaft,
**characterized in that**
at least one air conducting element (L1, L2) is provided and shaped such that, on a rotation of the shaft (W) of the sensor (S), air within the sensor (S) is directly conducted to the at least one evaluation unit (3) by the at least one air conducting element (L1, L2) along the shaft (W) of the sensor (S).

2. An optoelectronic sensor (S) in accordance with claim 1, **characterized in that** the fastening plate (B) is arranged perpendicular to the shaft (W) of the sensor and the at least one evaluation unit and a first air conducting element (L1) are attached in series to the fastening plate (B) along the shaft (W) such that air is conducted in the direction of the fastening plate (B) by means of the first air conducting element (L1).

3. An optoelectronic sensor (S) in accordance with claim 1 or claim 2, **characterized in that** the at least one evaluation unit (3) is attached to one side of the fastening plate (B) and at least one second air conducting element (L2) is provided at the other side of the fastening plate (B) above at least one material-free region (4) of the fastening plate (B) such that air can be diverted by means of the second air conducting element (L2) through the at least one material-free region (4) of the fastening plate (B) along the shaft (W) of the sensor (S) to the at least one evaluation unit (3).

4. An optoelectronic sensor (S) in accordance with at least one of the preceding claims 1 to 4, **characterized in that** the first air conducting element (L1) comprises a propeller or an impeller that has a plurality of vanes (F1, F2).

5. An optoelectronic sensor (S) in accordance with claim 4, **characterized in that** a number of vane ends of the vanes (F) are curved around an axis that is perpendicular to the shaft (W) of the sensor (S).

6. An optoelectronic sensor (S) in accordance with at least one of the preceding claims 1 to 5, **characterized in that** the second air conducting element (L2) has a three-dimensional ramp shape that is open to one side and that increases in a direction of rotation of the shaft (W) of the sensor (S).

7. An optoelectronic sensor (S) in accordance with at least one of the preceding claims 1 to 6, **characterized in that** the at least one material-free region (4) of the fastening plate (B) is configured as a passage bore in the fastening plate (B).

8. An optoelectronic sensor (S) in accordance with at least one of the preceding claims 1 to 7, **characterized in that** four light transmission units (1), four light receiver units (2) and four correspondingly associated evaluation units (3) are provided; and **in that** a respective light transmission unit (1), a light receiver unit (2) and an evaluation unit (3) are provided as one optical unit (OE) and each optical unit is aligned in one respective direction of the sensor (S).

9. An optoelectronic sensor (S) in accordance with claim 8, **characterized in that** the fastening plate (B) has four ramp-shaped second air conducting elements (L2) that are arranged above four corresponding material-free regions (4) of the fastening plate (B) such that a ramp-shaped second air conducting element (L2) is associated with each evaluation unit (3).

## Revendications

1. Capteur optoélectronique (S), en particulier scanneur laser, destiné à détecter des objets, comportant
au moins un ensemble émetteur de lumière (1) pour émettre un rayon lumineux,
au moins un ensemble récepteur de lumière (2) pour recevoir un rayon lumineux réémis, et
au moins une unité d'évaluation (3) qui évalue le rayon lumineux réémis et qui est fixée sur un arbre (W) du capteur (S) au moyen d'une plaque de fixation, de telle sorte que lors d'une rotation de l'arbre, l'unité d'évaluation (3) tourne conjointement avec la plaque de fixation (B) autour de l'axe de rotation de l'arbre,
caractérisé en ce en qu'il est prévu au moins un élément de guidage d'air (L1, L2) qui est formé de telle sorte que lors d'une rotation de l'arbre (W) du capteur (S), de l'air est guidé à l'intérieur du capteur (S) par ledit au moins un élément de guidage d'air (L1, L2) le long de l'arbre (W) du capteur (S) directement sur ladite au moins une unité d'évaluation (3).

2. Capteur optoélectronique (S) selon la revendication 1,
**caractérisé en ce que**
la plaque de fixation (B) est agencée perpendiculairement à l'arbre (W) du capteur, et ladite au moins une unité d'évaluation et un premier élément de guidage d'air (L1) sont agencés sur la plaque de fixation (B) le long de l'arbre (W) en série avec la plaque de fixation (B), de sorte que de l'air est guidé en direction de la plaque de fixation (B) au moyen du premier élément de guidage d'air (L1).

3. Capteur optoélectronique (S) selon la revendication 1 ou 2, **caractérisé en ce que** ladite au moins une unité d'évaluation (3) est agencée sur un côté de la plaque de fixation (B), et au moins un second élément de guidage d'air (L2) est prévu sur l'autre côté de la plaque de fixation (B) au-dessus d'au moins une zone (4) exempte de matériau de la plaque de fixation (B), de telle sorte que l'air peut être dévié vers ladite au moins une unité d'évaluation (3) au moyen du second élément de guidage d'air (L2) par ladite au moins une zone (4) exempte de matériau de la plaque de fixation (B) le long de l'arbre (W) du capteur (S).

4. Capteur optoélectronique (S) selon l'une au moins des revendications 1 à 3, **caractérisé en ce que** le premier élément de guidage d'air (L1) est constitué par une hélice carénée ou non qui comprend une pluralité de pales (F1, F2).

5. Capteur optoélectronique (S) selon la revendication 4, **caractérisé en ce qu'**un certain nombre d'extrémités des pales (F) sont recourbées autour d'un axe qui est perpendiculaire à l'arbre (W) du capteur (S).

6. Capteur optoélectronique (S) selon l'une des revendications précédentes 1 à 5, **caractérisé en ce que** le second élément de guidage d'air (L2) présente une forme en rampe tridimensionnelle ouverte sur un côté, qui grandit dans un sens de rotation de l'arbre (W) du capteur (S).

7. Capteur optoélectronique (S) selon l'une des revendications précédentes 1 à 6, **caractérisé en ce que** ladite au moins une zone (4) exempte de matériau de la plaque de fixation (B) est réalisée sous forme de perçage traversant dans la plaque de fixation (B).

8. Capteur optoélectronique (S) selon l'une au moins des revendications précédentes 1 à 7, **caractérisé en ce qu'**il est prévu quatre ensembles émetteurs de lumière (1), quatre ensembles récepteurs de lumière (2) et quatre unités d'évaluation (3) associées en correspondance, et **en ce que** respectivement un ensemble émetteur de lumière (1), un ensemble récepteur de lumière (2) et une unité d'évaluation sont prévus en tant qu'unité optique (OE), et chaque unité optique (OE) est orientée respectivement dans une direction du capteur (S).

9. Capteur optoélectronique (S) selon la revendication 8, **caractérisé en ce que** la plaque de fixation (B) comprend quatre secondes éléments de guidage d'air (L2) en forme de rampe qui sont agencés au moyen de quatre zones correspondantes (4) exemptes de matériau de la plaque de fixation (B), de sorte qu'à chaque unité d'évaluation (3) est associé un second élément de guidage d'air (L2) en forme de rampe.
